# EUROPÄISCHE PATENTSCHRIFT

(11) **EP 2 532 903 B1**
(45) Veröffentlichungstag und Bekanntmachung des Hinweises auf die Patenterteilung: **01.02.2017**
(21) Anmeldenummer: 12167217.4
(22) Anmeldetag: 09.05.2012
(51) Int. Cl.: F16B 13/00, F16B 13/12, F16B 15/02

(54) **Befestigungsvorrichtung**
Attachment device
Dispositif de fixation

(30) Priorität: 06.06.2011 DE 102011076970
(43) Veröffentlichungstag der Anmeldung: 12.12.2012
(73) Patentinhaber: HILTI Aktiengesellschaft, 9494 Schaan (LI)
(72) Erfinder: Baudy, Daniel, 6800 Feldkirch (AT); Kieber, Markus, 9486 Schaanwald (LI)
(74) Vertreter: Hilti Aktiengesellschaft Corporate Intellectual Property

(56) Entgegenhaltungen:
- EP-A1- 1 669 615
- WO-A2-01/42665
- FR-A1- 2 776 723
- FR-A1- 2 832 089
- US-A1- 2006 165 506

## Beschreibung

Die vorliegende Erfindung betrifft eine Vorrichtung zur Befestigung eines ersten Gegenstands an einem zweiten Gegenstand in einer Befestigungsrichtung.

Derartige Vorrichtungen umfassen häufig einen in der Befestigungsrichtung orientierten Schaft, wobei der Schaft an seinem in der Befestigungsrichtung weisenden Ende eine Spitze aufweist. Es sind Vorrichtungen bekannt, bei denen der Schaft eine Durchführung für ein Befestigungselement aufweist, wobei sich die Durchführung derart in der Befestigungsrichtung durch den Schaft hindurch erstreckt, dass die Spitze durch einen kreisförmigen Rand der Durchführung ersetzt ist.

Aus der EP 1 669 615 A1 ist ein Schraubdübel mit einem Hülsenkörper bekannt, bei dem der Hülsenkörper in einem Vorbohrelement endet. Das Vorbohrelement besteht aus frei endenden Bohrschenkeln, die jeweils eine in einer äusseren Schneidspitze endende Schneidkante bilden. Am freien Ende eines radial nach innen gerichteten Fortsatzes eines der Bohrschenkel ist eine Zentrierspitze vorgesehen.

Aus der WO 01/42665 A2 ist eine Verankerung mit einem Gewinde und einer Selbstbohrspitze bekannt. Die Selbstbohrspitze soll für eine Selbstzentrierung sorgen.

Aus der FR 2 776 723 A1 ist eine Vorrichtung zur Befestigung in Holz bekannt. Die Vorrichtung weist Zähne auf, welche das Eindringen ins Holz erleichtern sollen. Während des Eindringvorgangs ins Holz biegen sich die Zähne auseinander und nehmen eine gebogene Form an, so dass Holzmaterial in einen Hohlraum zwischen den Zähnen eintreten kann.

Der Erfindung liegt die Aufgabe zu Grunde, eine gattungsgemässe Vorrichtung zur Verfügung zu stellen, welche einen formstabilen Schaft aufweist, und mit der dennoch ein Eintauchen der Vorrichtung in einen Gegenstand erleichtert ist.

Die Aufgabe wird bei einer Vorrichtung zur Befestigung eines ersten Gegenstands an einem zweiten Gegenstand in einer Befestigungsrichtung, mit einem Widerlager zur Abstützung des ersten Gegenstands in der Befestigungsrichtung, und mit einem Schaft, welcher von dem Widerlager abragt und einen Durchbruch für ein Befestigungselement aufweist, gelöst, wobei der Schaft an seinem dem Widerlager gegenüberliegenden Ende mindestens zwei an einem Rand des Durchbruchs angeordnete Spitzen aufweist, wobei der Rand eine erste Schneidkante aufweist. Das Widerlager ist dabei bevorzugt als Kopf ausgebildet. Ebenfalls bevorzugt ragt der Schaft in Befestigungsrichtung von dem Widerlager ab.

Eine bevorzugte Ausführungsform ist dadurch gekennzeichnet, dass der Schaft an seinem dem Widerlager gegenüberliegenden Ende mindestens drei Spitzen aufweist.

Eine bevorzugte Ausführungsform ist dadurch gekennzeichnet, dass die Spitzen in Befestigungsrichtung orientiert sind.

Eine bevorzugte Ausführungsform ist dadurch gekennzeichnet, dass das Widerlager eine Anlagefläche für eine Anlage des Widerlagers an dem ersten Gegenstand aufweist. Bevorzugt ist die Anlagefläche im Wesentlichen eben. Gemäss einer ebenfalls bevorzugten Variante ist die Anlagefläche gewölbt, besonders bevorzugt konkav gewölbt.

Eine bevorzugte Ausführungsform ist dadurch gekennzeichnet, dass die Vorrichtung ein Stützelement zur Abstützung des ersten Gegenstands quer zur Befestigungsrichtung aufweist, welches gegenüber der Befestigungsrichtung geneigt von der Anlagefläche abragt.

Eine bevorzugte Ausführungsform ist dadurch gekennzeichnet, dass ein Übergang von dem Schaft zu dem Widerlager kegelstumpfförmig ausgebildet ist.

Bevorzugt erstreckt sich die erste Schneidkante bis zu einer oder zwei der Spitzen.

Eine bevorzugte Ausführungsform ist dadurch gekennzeichnet, dass der Durchbruch eine Drainage aufweist. Besonders bevorzugt ist die Drainage als Drainageöffnung und/oder Drainagekanal ausgebildet.

Eine bevorzugte Ausführungsform ist dadurch gekennzeichnet, dass der Schaft eine Verstärkungsrippe aufweist. Besonders bevorzugt erstreckt sich die Verstärkungsrippe bis zu einem dem Widerlager gegenüberliegenden Ende des Schaftes. Gemäss einer bevorzugten Ausgestaltung erstreckt sich die Verstärkungsrippe bis zu einer der Spitzen. Gemäss einer ebenfalls bevorzugten Ausgestaltung erstreckt sich die Verstärkungsrippe bis zu einem Bereich des Schaftes zwischen zwei Spitzen. Bevorzugt weist die Verstärkungsrippe eine zweite Schneidkante auf.

Die Erfindung wird im Folgenden unter Bezugnahme auf die Zeichnungen näher erläutert. Es zeigen:
- Fig. 1: eine Befestigungsvorrichtung in einer Schrägansicht,
- Fig. 2: eine Befestigungsvorrichtung in einer Aufsicht und
- Fig. 3: eine Befestigungsvorrichtung in einer Seitenansicht.

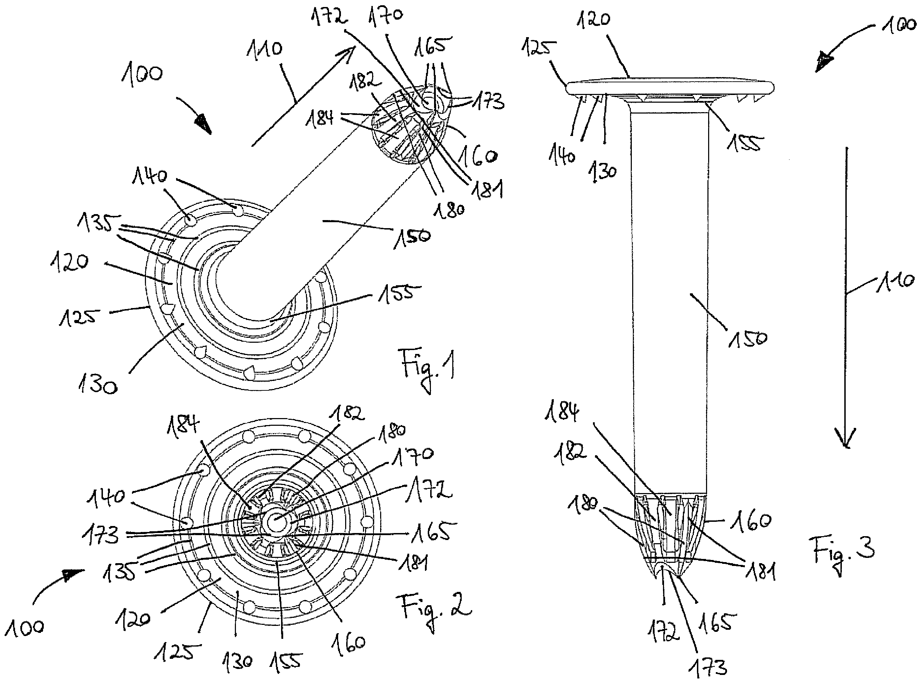

In den Fig. 1 bis 3 ist eine Vorrichtung 100 zur Befestigung eines nicht gezeigten ersten Gegenstands, beispielsweise einer Isolationsplatte, an einem ebenfalls nicht gezeigten zweiten Gegenstand, beispielsweise einem Flachdach, dargestellt. Die Vorrichtung 100 wird grundsätzlich in einer Befestigungsrichtung 110 an einem Untergrund oder Ähnlichem befestigt. Sie weist dazu ein als Kopf 120 ausgebildetes Widerlager zur Abstützung des ersten Gegenstands in der Befestigungsrichtung auf, wobei der Kopf 120 seinerseits eine im Wesentlichen ebene Anlagefläche 130 für eine Anlage des Kopfes 120 an dem ersten Gegenstand aufweist. Bei nicht dargestellten Ausführungsbeispielen sind der Kopf und/oder die Anlagefläche konvex, insbesondere sphärisch konvex, ausgebildet. Die Anlagefläche 130 ist mit Versteifungsrippen 135 versehen.

Weiterhin umfasst die Vorrichtung 100 mehrere Stützelemente 140 zur Abstützung des ersten Gegenstands quer zur Befestigungsrichtung 110, welche gegenüber der Befestigungsrichtung 110 von einem Rand 125 des Kopfes 120 weg geneigt von der Anlagefläche 130 abragen. Die Stützelemente 140 sind als noppenförmige Vorsprünge ausgebildet und weisen jeweils eine im Wesentlichen kegelförmige Aussenfläche auf. Bei nicht dargestellten Ausführungsbeispielen ragen die Stützelemente senkrecht von der insbesondere gewölbten Anlagefläche ab.

Weiterhin weist die Vorrichtung 100 einen Schaft 150 auf, welcher in der Befestigungsrichtung 110 zentral von dem Kopf 120 abragt, so dass die Stützelemente 140 auf den Schaft zu geneigt sind. An seinem dem Kopf 120 gegenüberliegenden Ende weist der Schaft 150 einen Spitzenbereich 160 auf. Der Übergang 155 von dem Kopf 120 zu dem Schaft 150 ist kegelstumpfförmig ausgebildet und weist drei in Befestigungsrichtung 110 aufeinander folgende Kegelstümpfe auf, deren Mantellinien unterschiedliche Neigungswinkel zu einer Befestigungsebene aufweisen, die entgegen der Befestigungsrichtung 110 immer kleiner werden. Die Befestigungsebene ist dabei senkrecht zur Befestigungsrichtung 110 ausgerichtet. Der Neigungswinkel der Mantellinie eines Kegelstumpfs ist jeweils im Wesentlichen halb so gross wie der Neigungswinkel der Mantellinie des in Befestigungsrichtung 110 benachbarten Kegelstumpfs. In Fig. 1 halbieren sich also die Neigungswinkel von jeweils einem Kegelstumpf zum nächsten von innen nach aussen. Bei nicht gezeigten Ausführungsbeispielen ist der Übergang 155 derart ausgerundet gestaltet, dass sich der Neigungswinkel des Übergangs 155 vom Schaft 150 zum Kopf 120 kontinuierlich und vorzugsweise stetig ändert.

Der Spitzenbereich 160 weist drei Spitzen 165 auf, welche in der Befestigungsrichtung 110 orientiert sind, das heisst die Spitzen 165 ragen in der Befestigungsrichtung 110 von dem Schaft beziehungsweise von dem Spitzenbereich ab. Dadurch wird ein Eintauchen der Vorrichtung 100 in den nicht gezeigten ersten Gegenstand erleichtert, wenn die Vorrichtung 100 in Befestigungsrichtung 110 in den ersten Gegenstand eingesteckt wird. Dadurch, dass der Spitzenbereich 160 eine Mehrzahl von Spitzen 165 aufweist, ist eine stabile Ausführung des Spitzenbereichs 160 gewährleistet, so dass eine unerwünschte Verformung, insbesondere ein Abknicken, des Spitzenbereichs 160 beim Eintauchen in den ersten Gegenstand erschwert ist.

Der Schaft 150 weist einen zentralen Durchbruch 170 auf, durch den ein Befestigungselement wie beispielsweise eine Schraube oder ein Nagel hindurchführbar ist. Die Spitzen 165 sind an einem Rand 172 des Durchbruchs 170 angeordnet und über erste Schneidkanten 173 miteinander verbunden, indem sich die Schneidkanten 173 jeweils bis zu zwei Spitzen 165 erstrecken. Die ersten Schneidkanten 173 sind ebenfalls in der Befestigungsrichtung 110 orientiert und erleichtern unter Umständen das Eintauchen der Vorrichtung 100 in den ersten Gegenstand, wenn die Vorrichtung 100 in Befestigungsrichtung 110 in den ersten Gegenstand eingesteckt wird. Insbesondere bei folienartigen ersten Gegenständen wird die Folie unter Umständen durch die ersten Schneidkanten aufgetrennt und die Bildung von Wellen oder Falten in der Folie verhindert. Der Durchbruch 170 und insbesondere der Schaft 150 weisen jeweils einen ausreichenden Durchmesser auf, um Schrauben mit verschiedenen Durchmessern zu verwenden. Bevorzugt sind Schrauben mit 6,7 mm Durchmesser und solche mit 4,8 mm Durchmesser in dem Durchbruch 170 verwendbar.

Weiterhin weist der Spitzenbereich 160 erste Verstärkungsrippen 180 auf, welche sich jeweils bis zu einer der Spitzen 165 erstrecken. Dadurch werden nicht nur der Schaft 150, insbesondere der Spitzenbereich 160, sondern auch die Spitzen 165 selbst weiter stabilisiert. Weiterhin weist der Spitzenbereich 160 zweite Verstärkungsrippen 182 auf, welche sich jeweils bis zu einem Bereich des Spitzenbereichs 160 zwischen zwei Spitzen 165 und insbesondere bis zum Rand 172 des Durchbruchs 170 erstrecken. Dadurch wird der Schaft 150, insbesondere der Spitzenbereich 160, verstärkt. Weiterhin weist der Spitzenbereich 160 dritte Verstärkungsrippen 184 auf, welche jeweils zwischen einer ersten Verstärkungsrippe 180 und einer zweiten Verstärkungsrippe 182 angeordnet und von dem Rand 172 des Durchbruchs 170 beabstandet sind. Dadurch wird der Spitzenbereich 160 weiter verstärkt. Die ersten Verstärkungsrippen 180 weisen jeweils eine zweite Schneidkante 181 auf, welche quer zur Befestigungsrichtung 110 radial nach aussen orientiert ist und sich bis zu einer der Spitzen 165 erstreckt. Die zweiten Schneidkanten 181 dienen unter Umständen einer weiteren

Erleichterung des Eintauchens der Vorrichtung 100 in den ersten Gegenstand. Insbesondere bei folienartigen ersten Gegenständen wird die Folie unter Umtänden durch die zweiten Schneidkanten aufgetrennt und die Bildung von Wellen oder Falten in der Folie verhindert. Die Erfindung wurde anhand einer Befestigungsvorrichtung für eine Isolationsplatte auf einem Flachdach beschrieben. Es wird jedoch darauf hingewiesen, dass die Erfindung auch anderweitig anwendbar ist.

## Patentansprüche

1. Vorrichtung zur Befestigung eines ersten Gegenstands an einem zweiten Gegenstand in einer Befestigungsrichtung, mit einem Widerlager zur Abstützung des ersten Gegenstands in der Befestigungsrichtung, und mit einem Schaft (150), welcher insbesondere in Befestigungsrichtung von dem insbesondere als Kopf (120) ausgebildeten Widerlager abragt und einen Durchbruch (170) für ein Befestigungselement aufweist, wobei der Schaft (150) an seinem dem Widerlager gegenüberliegenden Ende mindestens zwei an einem Rand des Durchbruchs (170) angeordnete Spitzen (165) aufweist, **dadurch gekennzeichnet, dass** der Rand eine erste Schneidkante (173) aufweist.

2. Vorrichtung nach Anspruch 1, wobei der Schaft (150) an seinem dem Widerlager gegenüberliegenden Ende mindestens drei Spitzen (165) aufweist.

3. Vorrichtung nach einem der vorhergehenden Ansprüche, wobei die Spitzen (165) in Befestigungsrichtung orientiert sind.

4. Vorrichtung nach einem der vorhergehenden Ansprüche, wobei das Widerlager eine Anlagefläche (130) für eine Anlage des Widerlagers an dem ersten Gegenstand aufweist.

5. Vorrichtung nach einem der vorhergehenden Ansprüche, wobei die Anlagefläche (130) im Wesentlichen eben ist.

6. Vorrichtung nach einem der vorhergehenden Ansprüche, wobei die Anlagefläche (130) insbesondere konkav gewölbt ist.

7. Vorrichtung nach einem der vorhergehenden Ansprüche, wobei die Vorrichtung ein Stützelement (140) zur Abstützung des ersten Gegenstands quer zur Befestigungsrichtung aufweist, welches gegenüber der Befestigungsrichtung geneigt von der Anlagefläche (130) abragt.

8. Vorrichtung nach einem der vorhergehenden Ansprüche, wobei ein Übergang von dem Schaft (150) zu dem Widerlager kegelstumpfförmig ausgebildet ist.

9. Vorrichtung nach einem der vorhergehenden Ansprüche, wobei die erste Schneidkante (173) in der Befestigungsrichtung orientiert ist.

10. Vorrichtung nach einem der vorhergehenden Ansprüche, wobei die erste Schneidkante (173) zwei Spitzen (165) miteinander verbindet.

11. Vorrichtung nach einem der vorhergehenden Ansprüche, wobei der Durchbruch (170) eine Drainage, insbesondere eine Drainageöffnung und/oder einen Drainagekanal aufweist.

12. Vorrichtung nach einem der vorhergehenden Ansprüche, wobei der Schaft (150) eine Verstärkungsrippe (180) aufweist, welche sich insbesondere bis zu einem dem Widerlager gegenüberliegenden Ende des Schaftes (150) erstreckt.

13. Vorrichtung nach Anspruch 12, wobei sich die Verstärkungsrippe (180) bis zu einer der Spitzen (165) erstreckt.

14. Vorrichtung nach Anspruch 12, wobei sich die Verstärkungsrippe (180) bis zu einem Bereich des Schaftes zwischen zwei Spitzen (165) erstreckt.

15. Vorrichtung nach einem der Ansprüche 12 bis 14, wobei die Verstärkungsrippe (180) eine zweite Schneidkante (181) aufweist.

## Claims

1. Device for fastening a first object to a second object in a fastening direction with an abutment for supporting the first object in the fastening direction and with a shaft (150), which projects, in particular in the fastening direction, from the abutment, which in particular is formed as a head (120), and has an opening (170) for a fastening element, in which at its end opposite the abutment the shaft (150) has at least two tips (165) arranged on an edge of the opening (170), **characterised in that** the edge has a first cutting edge (173).

2. Device according to claim 1, in which the shaft (150) has at least three tips (165) at its end opposite the abutment.

3. Device according to one of the previous claims, in which the tips (165) are aligned in the fastening direction.

4. Device according to one of the previous claims, in which the abutment has a contact surface (130) for locating the abutment on the first object.

5. Device according to one of the previous claims, in which the contact surface (130) is essentially flat.

6. Device according to one of the previous claims, in which the contact surface (130) is curved in a concave way in particular.

7. Device according to one of the previous claims, in which the device has a support element (140) for supporting the first object crosswise to the fastening direction, which projects from the contact surface (130) sloping with respect to the fastening direction.

8. Device according to one of the previous claims, in which a transition from the shaft (150) to the abutment is made in a conical shape.

9. Device according to one of the previous claims, in which the first cutting edge (173) is aligned in the fastening direction.

10. Device according to one of the previous claims, in which the first cutting edge (173) connects two tips (165) with each other.

11. Device according to one of the previous claims, in which the opening (170) has drainage, particularly a drainage opening and/or a drainage channel.

12. Device according to one of the previous claims, in which the shaft (150) has a reinforcement rib (180), which extends as far as an end of the shaft (150) opposite the abutment in particular.

13. Device according to claim 12, in which the reinforcement rib (180) extends as far as one of the tips (165).

14. Device according to claim 12, in which the reinforcement rib (180) extends as far as an area of the shaft between two tips (165).

15. Device according to one of claims 12 to 14, in which the reinforcement rib (180) has a second cutting edge (181).

## Revendications

1. Dispositif pour la fixation d'un premier objet sur un second objet dans une direction de fixation, comportant un contre-palier pour supporter le premier objet dans la direction de fixation, et une tige (150) qui fait saillie, en particulier dans la direction de fixation, à partir du contre-palier en particulier formé comme une tête (120) et comporte un trou traversant (170) pour un élément de fixation, dans lequel la tige (150) comporte, sur son extrémité opposée au contre-palier, au moins deux pointes (105) agencées sur un rebord du trou traversant (170), **caractérisé en ce que** le rebord comporte un premier bord tranchant (173).

2. Dispositif selon la revendication 1, dans lequel la tige (150) comporte, sur son extrémité opposée au contre-palier, au moins trois pointes (165).

3. Dispositif selon l'une des revendications précédentes, dans lequel les pointes (165) sont orientées dans la direction de fixation.

4. Dispositif selon l'une des revendications précédentes, dans lequel le contre-palier comporte une surface de contact (130) pour un contact du contre-palier avec le premier objet.

5. Dispositif selon l'une des revendications précédentes, dans lequel la surface de contact (130) est sensiblement plane.

6. Dispositif selon l'une des revendications précédentes, dans lequel la surface de contact (130) est bombée de manière sensiblement concave.

7. Dispositif selon l'une des revendications précédentes, dans lequel le dispositif comporte un élément de support (140) pour supporter le premier objet transversalement à la direction de fixation, lequel élément de support fait saillie à partir de la surface de contact (130) par rapport à la direction de fixation.

8. Dispositif selon l'une des revendications précédentes, dans lequel une transition de la tige (150) au contre-palier est formée de manière tronconique.

9. Dispositif selon l'une des revendications précédentes, dans lequel le premier bord tranchant (173) est orienté dans la direction de fixation.

10. Dispositif selon l'une des revendications précédentes, dans lequel le premier bord tranchant (173) relie deux pointes (165) l'une à l'autre.

11. Dispositif selon l'une des revendications précédentes, dans lequel le trou traversant (170) comporte une évacuation, en particulier une ouverture d'évacuation et/ou un canal d'évacuation.

12. Dispositif selon l'une des revendications précédentes, dans lequel la tige (150) comporte une nervure de renfort (180) qui s'étend sensiblement jusqu'à une extrémité de la tige (150) opposée au contre-palier.

13. Dispositif selon la revendication 12, dans lequel la nervure de renfort (180) s'étend jusqu'à l'une des pointes (165).

14. Dispositif selon la revendication 12, dans lequel la nervure de renfort (180) s'étend jusqu'à une zone de la tige située entre deux pointes (165).

15. Dispositif selon l'une des revendications 12 à 14, dans lequel la nervure de renfort (180) comporte un second bord tranchant (181).
